Europäisches Patentamt

European Patent Office

Office européen des brevets

(19)

(11) Numéro de publication : **0 461 983 B1**

(12) # FASCICULE DE BREVET EUROPEEN

(45) Date de publication du fascicule du brevet :
**12.04.95 Bulletin 95/15**

(51) Int. Cl.[6] : **G07F 7/10**

(21) Numéro de dépôt : **91401527.6**

(22) Date de dépôt : **10.06.91**

(54) **Procédé de transfert de secret, par échange de deux certificats entre deux microcalculateurs s'authentifiant réciproquement.**

(30) Priorité : **11.06.90 FR 9007228**

(43) Date de publication de la demande :
**18.12.91 Bulletin 91/51**

(45) Mention de la délivrance du brevet :
**12.04.95 Bulletin 95/15**

(84) Etats contractants désignés :
**DE GB**

(56) Documents cités :
**EP-A- 0 294 248**
**EP-A- 0 311 470**
**EP-A- 0 325 238**
**US-A- 4 424 414**
**US-A- 4 797 920**
**SECPRI - Sixth IEEE Symposium on Security and Privacy, avril 1985, pages 123-132 ; T. OKAMOTO et al. : "A Fast Signature Scheme Based On Quadratic Inequalities"**
**17th ACM Symposium on the Theory of Computing, mai 1985, pages 291-304 ; S. GOLDWASSER et al.: "The Knowledge Complexity of Interactive Proof-Systems"**
**Proceedings of CRYPTO 1984 - Lecture Notes in Computer Science, no. 196, 1985, Springer Verlag, pages 57-63; A. SHAMIR : "Identity-Based Cryptosystems And Signature Schemes"**

(73) Titulaire : **FRANCE TELECOM Etablissement autonome de droit Public (Centre National d'Etudes des Télécommunications),**
**38/40 rue du Général Leclerc**
**F-92131 Issy les Moulineaux (FR)**
Titulaire : **TELEDIFFUSION DE FRANCE S.A.**
**21-27, rue Barbès**
**F-92542 Montrouge Cédex (FR)**
Titulaire : **Philips Electronics N.V.**
**Groenewoudseweg 1**
**NL-5621 BA Eindhoven (NL)**

(72) Inventeur : **Angebaud, Didier**
**1 rue de la Garenne**
**F-35135 Chantepie (FR)**
Inventeur : **Giachetti, Jean-Luc**
**20 rue Duhamel Appt 104**
**F-35000 Rennes (FR)**
Inventeur : **Guillou, Louis**
**16 rue de l'Ise**
**F-35230 Bourgbarre (FR)**
Inventeur : **Quisquater, Jean-Jacques**
**4 av. Albert Einstein**
**F-1348 Louvin la Neuve (FR)**

(74) Mandataire : **Signore, Robert et al**
**c/o BREVATOME**
**25, rue de Ponthieu**
**F-75008 Paris (FR)**

## Description

La présente invention a pour objet un procédé de transfert de secret entre deux microcalculateurs.

Elle trouve une application dans la réalisation et l'utilisation de cartes à microcalculateur, communément appelées "cartes à puce", principalement dans le cas où ces cartes sont partageables entre plusieurs applications (cartes dites "multi-services" ou "multi-applications").

L'un des problèmes posé par ces cartes est de transférer, depuis un module de sécurité muni d'un microcalculateur, un secret ou une commande dans une carte à microcalculateur.

Les techniques utilisées aujourd'hui, pour résoudre ce problème, font appel à des algorithmes cryptographiques à clé secrète, avec hiérarchie de clés secrètes. L'émetteur de cartes dispose d'une clé maîtresse, qui est diversifiée dans les cartes en clés secondaires, en fonction de données variant d'une carte à l'autre (numéro de série de la puce ou numéro de compte du porteur de la carte par exemple).

Ainsi, chaque carte bancaire à puce émise aujourd'hui (masque M4 personnalisé en mode B0) est munie d'une clé diversifiée. Chaque module de sécurité dispose de la clé maîtresse. Il reconstitue en interne la clé diversifiée de la carte à laquelle il s'adresse, puis il utilise cette clé pour vérifier les résultats qu'il reçoit et pour protéger les actions qu'il commande.

Dans des masques plus récents, il existe un (ou plusieurs) trousseau(x) de clés cryptographiques dans chaque carte. Les clés utilisées pour garantir l'origine des données (clés d'intégrité) sont distinctes des clés utilisées pour protéger le secret des données (clés de confidentialité). C'est le cas dans les masques PC2, MP et TB100 conçus par BULL CP8 et par PHILIPS pour être partagés entre plusieurs applications).

Dans les cartes partageables entre plusieurs applications, une entité maîtresse (dite "Master File" ou MF en abrégé) peut créer des entités dédiées ("Dedicated File" ou DF). La mise en oeuvre de cartes multi-applications exige que l'autorité ayant émis les cartes délègue une partie de ses pouvoirs à des entités dédiées en leur attribuant une part des ressources de la carte. Plusieurs entités dédiées doivent pouvoir alors coexister dans une même carte, sans que la sécurité de l'une n'affecte la sécurité des autres.

Aujourd'hui, une clé maîtresse de l'émetteur doit être mise en oeuvre dans un module de sécurité pour ouvrir une nouvelle application dans une carte à puce. Les premières clés d'un fournisseur de services sont alors transmises à la carte sous la protection d'une clé appartenant à l'émetteur de la carte.

Il n'est cependant pas très sécurisant de mettre ses clés maîtresses dans des modules de sécurité relativement anonymes et dispersés en grand nombre dans un environnement assez mal contrôlé, ni de distribuer ses propres secrets sous le contrôle des secrets d'un autre, fut-il l'émetteur des cartes.

La présente invention propose un procédé pour éviter une telle hiérarchie de clés secrètes et les contraintes induites dans les opérations de délégation. Les modules de sécurité sont alors personnalisés tout comme des cartes. Toutefois, ces mécanismes respectent les notions d'entités maîtresses et d'entités dédiées (MF et DF) qui sont essentielles à l'architecture de sécurité des cartes à puce.

Avant de décrire l'invention, il n'est pas inutile de rappeler brièvement quels sont les outils connus habituellement mis en oeuvre dans ce genre de technique. Pour de plus amples informations, on pourra se reporter au brevet français FR-A-2 620 248 délivré aux présents Demandeurs pour "Procédés d'authentification d'accréditations ou de messages à apport nul de connaissance et de signature de messages" ainsi qu'aux nombreuses références bibliographiques contenues dans ce document, toutes références qui doivent être considérées comme incorporées à la présente demande.

Un procédé basé sur l'identité et sur une technique à clé publique est utilisé en France aujourd'hui pour compléter l'authentification des cartes à puce. Une description précise figure dans le document intitulé "Spécifications et normes de la carte à mémoire bancaire". Ce document (première édition Janvier 1984) est disponible au "Groupement des Cartes Bancaires" domicilié 29, rue de Lisbonne, Paris, 16ème.

Chaque carte bancaire à puce contient une valeur d'authentification. C'est un entier écrit sous forme de train de bits. Cet entier est lu par le vérificateur qui le contrôle, grâce à la clé publiée par l'autorité bancaire. En élevant un tel entier au cube et en gardant le reste de la division par un nombre n publié par l'autorité bancaire, on doit trouver un train de bits dont la première moitié est identique à la deuxième. Dans chaque moitié, on trouve diverses informations lisibles par ailleurs dans la carte : numéro de compte bancaire du porteur, numéro de série de la puce, période de validité et codes d'usage. Le train de bits codant ces informations constitue l'identité de la carte au sens large du terme.

Les contrôles des valeurs d'authentification se font en dehors des cartes, car les puces disponibles n'ont pas la puissance suffisante pour effectuer les calculs arithmétiques correspondants.

Pourtant, aujourd'hui, de nouveaux composants pour cartes à puce sont en phase finale de développement. Par exemple, le microcalculateur 83C852 de PHILIPS RTC doit exécuter divers calculs arithmétiques avec des performances ergonomiquement acceptables. Avec ce composant, diverses techniques à base de chiffres à clé publique deviennent réellement utilisables et tout particulièrement :

- les exponentielles sur les ensembles finis, qui permettent de mettre à la clé,
- les signatures numériques, qui permettent de calculer les accréditations,
- les techniques à apport nul de connaissance, qui permettent d'authentifier et de signer grâce aux accréditations.

Ces trois techniques peuvent être rapidement passées en revue.

## 1. Les exponentielles sur des ensembles finis

Les exponentielles sur des ensembles finis permettent à deux microcalculateurs de sécurité d'établir une clé secrète commune via une liaison dont l'intégrité est assurée, mais pas la confidentialité. Ce procédé a été décrit pour la première fois dans un article de Whitfield DIFFIE et Martin HELLMAN, intitulé "New Directions in Crytography", publié dans la revue "IEEE Transactions on Information Theory", Novembre 1976, vol. IT-22, pages 644-654. Dans ce procédé, les deux microcalculateurs de sécurité se sont mis d'accord publiquement sur l'utilisation d'un grand ensemble fini muni d'une loi commutative de multiplication. Cet ensemble peut être :

- un corps fini ayant pour caractéristique un nombre premier p à partir de 500 bits, la base des exponentielles étant un élément primitif a du corps (c'est-à-dire que ses puissances successives modulo p décrivent tous les éléments du corps) ; le nombre premier peut avantageusement être tel que (p-1)/2 soit également premier et avoir la forme $2^{512}\pm b$ avec b écrit sur moins de 20 bits ; la base a peut avantageusement être représentée par un octet ;
- un corps d'extension de deux à partir de la 1000-ième extension, la base des exponentielles étant alors la racine d'un polynôme primitif ;
- le groupe des points d'une courbe elliptique sur un corps fini.

A titre d'illustration, dans ce qui suit, on considérera le premier exemple. On remarquera que l'appelant peut indiquer à l'appelé les paramètres a et p choisis, au cas où il n'y aurait pas de valeurs normalisées pour cet usage.

Chaque microcalculateur de sécurité sélectionne au hasard et secrètement un entier positif inférieur à p qui va servir d'exposant. On notera x et y les deux exposants ainsi sélectionnés. Chaque microcalculateur calcule l'exponentielle correspondante, soit respectivement :

$$X = a^x \bmod p$$

$$Y = a^y \bmod p$$

Puis, les microcalculateurs échangent leurs résultats ; chacun élève la valeur qu'il reçoit à son propre exposant secret. La fonction exponentielle étant commutative, les deux microcalculateurs de sécurité parviennent à une clé secrète commune K :

$$K = X^y \bmod p = a^{xy} \bmod p$$

$$K = Y^x \bmod p = a^{yx} \bmod p.$$

Un troisième microcalculateur, observant les échanges X et Y, ne parvient pas à rétablir la clé K, car, dans les grands ensembles finis considérés, on ne sait pas inverser la fonction exponentielle. Tous les algorithmes connus pour calculer les logarithmes discrets deviennent vite inefficaces quand la taille de ces ensembles finis augmente.

Toutefois, il convient de noter qu'un troisième microcalculateur, intercalé sur la liaison peut constituer une clé K' d'un côté, et une clé K" de l'autre, sans que les microcalculateurs de sécurité s'en aperçoivent. Pour être utilisable, un tel protocole doit donc absolument être complété par une procédure d'authentification ou par une signature.

## 2. Les schémas de signature numérique à clé publique

Une signature numérique en échange électronique de l'information est l'équivalent d'une signature manuelle en courrier classique.

Dans tout schéma de signature numérique à clé publique, une clé secrète est mise en oeuvre dans une "opération de signature" pour signer des messages, et une clé publique est mise en oeuvre dans une "opération de vérification" pour vérifier les signatures. Une paire de clés se compose donc d'une "clé secrète de signature" et d'une "clé publique de vérification".

Deux types de schéma de signature numérique ont été clairement définis et identifiés :

- quand l'opération de vérification exige le message comme élément d'entrée, le schéma est un "schéma de signature avec appendice" ; le calcul de l'appendice utilise une fonction de compression,
- quand l'opération de vérification révèle à la fois le message et sa redondance spécifique, parfois appelée "ombre du message", le schéma est un "schéma de signature rétablissant le message".

Dans ce dernier cas, le message peut être le résultat de la compression d'un autre message plus long, ce qui est encore appelé "empreinte d'un message". En appliquant à un message une fonction de compression donnant une empreinte de 128 bits, puis en appliquant à l'empreinte un schéma de signature rétablissant le message, on peut avantageusement réaliser un schéma de "signature avec empreinte", ce qui est un cas particulier de schéma de signature avec appendice. Certaines dispositions en cours d'étude visent à distinguer clairement les deux opérations : la signature d'un message et la signature de l'empreinte du message.

Aujourd'hui, l'Organisation Internationale de Normalisation (ISO) définit un schéma de signature rétablissant le message (ISO/CEI DIS9796) et des fonctions de compression pour des signatures numériques (ISO/CEI DP10118). Les deux propositions sont détaillées ci-dessous :

## 2.1 Le schéma de signature ISO/CEI 9796

L'entité qui doit signer s'est dotée en privé et en sécurité d'une paire de clés. Ces clés sont avantageusement sélectionnées selon les prescriptions du projet de Norme internationale ISO/CEI DIS9796, "Schéma de signature numérique rétablissant le message". Ce schéma dérive de l'algorithme RSA (du nom de leurs inventeurs, RIVEST, SHAMIR et ADLEMAN). Il le généralise aux exposants pairs et il travaille sur les éléments inférieurs à n/2 dans l'anneau des entiers modulo n. Cet ensemble, muni des lois d'addition et de multiplication, a aussi une structure d'anneau. Les opérations dans cet anneau seront notées "mod∗n".

Un module arithmétique n est le produit de deux nombres premiers impairs sélectionnés au hasard et maintenus secrets. Si l'exposant de vérification est pair, alors l'un des deux nombres premiers doit être congru à 3 modulo 8 et l'autre à 7 modulo 8. Il existe un entier k unique tel que le module arithmétique soit compris entre la (k-1)-ième et la k-ième puissance de 2 ; ainsi, le module arithmétique est codé par un train de k bits avec un bit à 1 en poids fort et un bit à 1 en poids faible. La clé publique de vérification comprend le module arithmétique n et l'exposant de vérification v. La clé secrète de signature comprend l'exposant de signature s.

Le message à signer est un train de bits de longueur limitée. Par remplissage avec 0 à 7 zéros en poids fort, on obtient un train de z octets. La longueur maximale du message à signer est fonction de la longueur du module arithmétique : 16z doit être plus petit ou égal à k+2.

On définit le nombre t comme le plus petit entier tel qu'un train de 2t octets soit plus long ou égal à k-2 bits. Par une éventuelle extension répétant les z octets pour atteindre t octets et par introduction intercalée de t octets de redondance pour doubler la longueur tout en marquant la limite exacte du message, on obtient un train de 2t octets codant le "message avec redondance".

Ensuite, on construit un train de k-1 bits avec un bit à 1 en poids fort suivi des k-2 bits de poids faible du message avec redondance, à part l'octet de poids faible qui est remplacé pour forcer à 6 le quartet de poids faible. Ces précautions (bit 1 en poids fort et quartet à 6 en poids faible) permettent de contrer diverses attaques connues contre l'algorithme RSA. Ce train de k-1 bits code "l'entier avec redondance".

L'élément représentatif est égal à l'entier avec redondance sauf quand v est pair et que le symbole de Jacobi de l'entier, par rapport au module arithmétique n, est -1. Dans ce cas, il est égal à l'entier divisé par deux. Ainsi, quand l'exposant v est pair, le symbole de Jacobi de l'élément représentatif par rapport au module arithmétique n est forcé à +1 compte tenu de la contrainte que l'un des facteurs est congru à 3 modulo 8 et l'autre à 7 modulo 8. Cette précaution complète les précautions précédentes pour permettre l'usage des exposants pairs.

En élevant un élément représentatif à la puissance s mod∗n, l'autorité obtient la signature du message.

Pour vérifier une signature, il faut l'élever à la puissance v mod∗n. Puis, il faut rétablir l'entier avec redondance qui est codé par un train de k-1 bits avec un bit à 1 en poids fort et un quartet à 6 en poids faible. Ensuite, il faut rétablir un train de 2t octets avec les k-2 bits de poids faible de l'entier avec redondance et 0 à 15 zéros en poids fort. Enfin, il faut tester la redondance de ces 2t octets avant d'en extraire le message rétabli quand la signature a été acceptée.

## 2.2 Les fonctions de compression

Dans beaucoup de mécanismes destinés à protéger l'intégrité (authentification et signature), on a besoin de fonctions pseudo-aléatoires qui transforment les trains arbitraires de bits en trains de bits d'une longueur limitée donnée. Une telle fonction peut être utilisée pour :
- réduire un message à une empreinte avant de signer cette empreinte (selon la norme ISO/CEI 9796 par exemple),
- réduire un train d'éléments de données à une empreinte ou à un pseudo-challenge,
- simuler des choix aléatoires, diversifier une valeur de base, ou s'engager sur une valeur sans la révèler.

Ces fonctions de compression doivent résister à la mise en collision. Cela signifie qu'il doit être pratiquement impossible de trouver deux trains de bits en entrée qui donnent le même résultat en sortie.

Certaines propositions sont particulièrement séduisantes, comme l'algorithme MD4 ("Message Digest Algorithm", publié par "RSA Security Incorporated") conçu par Ron RIVEST du Massachusetts Institute of Technology et qui donne des résultats sur 128 ou 256 bits.

## 3. Les techniques à apport nul de connaissance

La notion de "technique à apport nul de connaissance" a été introduite en mai 1985 dans une communication de Shafi GOLDWASSER, Silvio MICALI et Charlie RACKOFF, intitulée "The Knowlegde Complexity of interactive Proofs", publiée dans "Proceedings of the 17-th STOC, ACM Symposium on Theory of Computing", pages 291-304.

Ces techniques permettent une évolution naturelle des procédés (valeurs d'authentification et identités certifiées) utilisés en France pour compléter l'authentification de diverses cartes à puce.

Aujourd'hui, les valeurs d'authentification des cartes bancaires et les identités certifiées des cartes téléphoniques sont lues par le vérificateur qui les contrôle grâce aux clés publiques de l'autorité bancaire ou de France Télécom.

Dans l'avenir, pour chaque application, le microcalculateur de sécurité se verra attribuer une "créance" publique Cr et une accréditation secrète B. Une créance est un train de bits de longueur limitée contenant divers éléments de données : un nom (porteur, autorité d'émission), une période de validité, les services accessibles, voire le numéro de série du microcalculateur. L'accréditation s'obtient par signature de la créance.

Les techniques à apport nul de connaissance permettent à un microcalculateur de sécurité de convaincre un autre microcalculateur qu'il détient la solution à un problème complexe sans révéler cette solution. Ainsi, la solution (dans la pratique, une accréditation obtenue par signature d'une créance) peut être utilisée autant de fois qu'il est nécessaire, sans que le secret ne soit divulgué.

En résumé, une autorité accrédite des microcalculateurs de sécurité, qui prouvent ensuite leur identité et leurs droits à des vérificateurs qui sont souvent, dans la pratique, d'autres microcalculateurs de sécurité.

L'autorité est caractérisée par sa clé publique de vérification. Elle doit utiliser et garder secrète la clé de signature correspondante.

Le microcalculateur de sécurité est caractérisé par sa créance. Il doit utiliser et garder secrète l'accréditation correspondante.

Le vérificateur est anonyme. Il doit seulement connaître et utiliser les éléments publics de données : la clé de vérification publiée par l'autorité et la créance proclamée par le microcalculateur de sécurité.

Pour exposer plus avant cette technique, il faut décrire successivement :
- une opération d'accréditation utilisée par une autorité pour accréditer des microcalculateurs de sécurité,
- une authentification interactive, durant laquelle un vérificateur authentifie un microcalculateur de sécurité,
- un schéma de signature numérique avec appendice, comprenant les opérations de signature et de vérification.

## 3.1 Opération d'accréditation

Chaque autorité qui accrédite s'est dotée en privé et en sécurité d'une paire de clés, conformément à la norme ISO/CEI DIS9796, "Schéma de signature numérique rétablissant le message". La clé publique comprend un module arithmétique n et un exposant v de vérification ; la clé secrète comprend un exposant s de signature. Le module arithmétique n est codé par un train de k bits, comme expliqué précédemment.

L'autorité calcule en privé et en sécurité les accréditations à partir des créances (correspondant au message à signer dans la norme 9796) selon les prescriptions de ISO/CEI DIS9796, à part que l'exposant secret s est remplacé par -s. En élevant un représentant J (correspondant à l'élément représentatif dans la norme 9796) à la puissance -s mod∗n, l'autorité obtient l'accréditation B. On rappelle que la notation "mod∗n" signifie : prendre le reste de la division par n, puis garder ce reste ou son complément à n, le plus petit des deux.

Une accréditation B, un représentant J et une créance Cr vérifient les équations données ci-dessous où la fonction "Red" résume les règles prescrites par la norme ISO/CEI DIS9796 pour constituer un représentant à partir d'une créance (respectivement un "élément représentatif" et un "message assigné" dans DIS9796). Par conséquent, une accréditation B peut être considérée comme la solution secrète à une équation où tous les autres paramètres sont publics : J est le représentant déduit de la créance Cr ; v et n constituent la clé publique de l'autorité d'émission :

$$J = \text{Red}(Cr) \text{ et } J\, B^v \bmod * n = 1.$$

L'autorité écrit en privé et en sécurité une créance Cr et une accréditation B dans le microcalculateur. Cette opération s'appelle "émission" quand l'inscription se fait dans l'entité maîtresse (MF) ou "délégation" quand l'inscription se fait dans une entité dédiée (DF). Une accréditation doit être maintenue secrète pour toute entité autre que l'autorité et le microcalculateur de sécurité concerné. En proclamant la créance Cr, un microcalculateur de sécurité prétend donc connaître l'accréditation correspondante B.

Le brevet FR-A-2 620 248, déjà cité, montre comment utiliser de telles accréditations pour authentifier le microcalculateur de sécurité et pour authentifier et signer des messages reçus ou émis par ce microcalculateur de sécurité. Cette authentification, dite GQ pour GUILLOU-QUISQUATER, des noms de leurs inventeurs, s'effectue en quatre phases et trois échanges, comme il va maintenant être précisé.

## 3.2 Authentification GQ en quatre phases et trois échanges

- le microcalculateur de sécurité, proclamant sa créance Cr, sélectionne au hasard un élément r dans l'ensemble des entiers mod∗ n, puis calcule mod∗n la v-ième puissance de cet élément r. Le résultat est un témoin initial Tb ; le microcalculateur transmet le témoin initial Tb au vérificateur,

- puis le vérificateur sélectionne au hasard un challenge d de 0 à v-1, et le transmet au microcalculateur,
- le microcalculateur de sécurité calcule mod∗n le produit de l'élément r par la d-ième puissance de l'accréditation secrète B ; le résultat est la réponse D ; le microcalculateur transmet la réponse D au vérificateur,
- le vérificateur calcule mod∗n le produit de la v-ième puissance de la réponse D par la d-ième puissance du représentant J correspondant à la créance Cr ; le résultat est un témoin final Tf ; l'authentification est réussie quand le témoin final Tf est égal au témoin initial Tb'.

On a donc les relations suivantes :

$Tb=r^v \bmod∗n$ ;

$D=rB^d \bmod∗n$ ;

$J=Red(Cr)$ ;

$Tf=D^vJ^d \bmod∗n$.

### 3.3 Schéma GQ de signature numérique avec appendice

Le schéma GQ peut également servir à la signature numérique avec appendice. Tout schéma de signature se compose d'une opération de signature et d'une opération de vérification :

**Opération de signature :**
- le microcalculateur de sécurité, ayant la créance Cr, sélectionne au hasard un élément r dans l'ensemble des entiers mod∗ n, et calcule mod∗n la v-ième puissance de cet élément ; le résultat est le témoin initial Tb,
- puis le microcalculateur applique une fonction de compression "Hash" à un train de bits contenant le message M à transmettre au vérificateur et le témoin initial Tb ; à partir du résultat de cette compression, le microcalculateur élabore un pseudo-challenge initial db ayant une valeur de 0 à v-1, par exemple en sélectionnant les bits de poids faible ; enfin, le microcalculateur calcule mod∗n le produit de l'élément r par la db-ième puissance de son accréditation secrète B ; Le résultat est la réponse D.

On a donc les relations suivantes :

$Tb=r^v \bmod∗n$ ;  db=sélect(Hash(M,Tb)) ;

$D=rB^{db} \bmod∗n$.

L'appendice signant le message M se compose de la créance Cr, du pseudo-challenge initial db et de la réponse D.

**Opération de vérification :**
- le vérificateur calcule mod∗n le produit de la v-ième puissance de la réponse D par la db-ième puissance du représentant J correspondant à la créance Cr ; le résultat est le témoin final Tf,
- puis le vérificateur applique la fonction de compression "Hash" à un train de bits contenant le message M reçu et le témoin final Tf ; le vérificateur élabore le pseudo-challenge final df en sélectionnant les bits de la même manière que le microcalculateur.

On a donc les relations suivantes :

$J=Red(Cr)$ ;  $Tf=D^vJ^{db} \bmod∗n$ ;  df=sélect-(Hash(M,Tf).

La signature est acceptée si et seulement si le pseudo-challenge final df est égal au pseudo-challenge initial db.

Les schémas GQ ont fait l'objet de quelques publications :
- "A practical zero-knowledge protocol fitted to security microprocessor minimizing both transmission and memory" par L. GUILLOU et J.J. QUISQUATER, dans "Proceedings of Eurocrypt'88, Lecture Notes in Computer Sciences", Editeur Springer Verlag., vol. 330, pp. 123-128.
- "A paradoxical identity-based signature scheme resulting from zero-knowledge" par L. GUILLOU and J.J. QUISQUATER, dans "Proceedings of Crypto'88, Lecture Notes in Computer Sciences", Editeur Springer Verlag, vol. 403, pp. 216-231.
- "Des procédés d'authentification basés sur une publication de problèmes complexes dont les solutions maintenues secrètes constituent autant d'accréditations", par JJ. QUISQUATER et L. GUILLOU, dans "Proceedings de Sécuricom'89, Paris", Mars 1989, pp. 149-158.

Ces rappels sur l'état de la technique ayant été effectués, l'invention va être décrite, étant entendu que le problème qu'elle résoud, comme indiqué plus haut, est celui de transférer un secret et/ou de commander une action entre deux microcalculateurs s'authentifiant réciproquement, sans secret préalable partagé et sans algorithme cryptographique commun.

De manière précise, le procédé de l'invention est caractérisé par le fait que :

a) une première autorité habilitée à émettre des cartes s'étant préalablement dotée d'une première clé publique constituée d'un premier module arithmétique, d'un premier exposant de vérification et d'un premier exposant de signature, et chaque carte ayant été définie par une accréditation obtenue par signature d'une créance, cette signature étant vérifiable à l'aide de cette première clé publique ;

b) une seconde autorité habilitée à émettre des modules de sécurité s'étant également préalablement dotée d'une seconde clé publique constituée d'un second module arithmétique, d'un second exposant de vérification et d'un second exposant de signature, et un module de sécurité ayant été défini par une accréditation obtenue par la signature d'une créance, cette signature étant vérifiable à l'aide de la seconde clé publique,

c) enfin, le premier et le second microcalculateurs s'étant préalablement mis d'accord publiquement sur l'utilisation d'exponentielles sur un ensemble fini apte à établir une clé commune fugitive,

ce procédé comprend alors les cinq opérations suivantes :

A) dans une première phase de calcul, réalisée par le microcalculateur de la carte, ce microcalculateur calcule une exponentielle X, un message optionnel M et une signature de X et M vérifiable à l'aide de la première clé publique,

B) dans un premier mouvement de données, le microcalculateur de la carte transmet au microcalculateur du module de sécurité un premier certificat, qui comprend la créance de la carte ainsi que la signature de X et M,

C) dans une deuxième phase de calcul, réalisée par le microcalculateur du module de sécurité, ce microcalculateur vérifie, à l'aide de la première clé publique, que le certificat qu'il a reçu a bien été signé par la carte, et, dans l'affirmative, calcule l'exponentielle de l'exponentielle X qu'il a reçue, ce qui constitue une clé commune fugitive, calcule encore un message optionnel M', sa propre exponentielle Y et élabore un cryptogramme à partir de la clé commune fugitive et du secret à transmettre et signe M', Y et C,

D) dans un deuxième mouvement de données, le microcalculateur du module de sécurité transmet au microcalculateur de la carte un second certificat, qui comprend la créance du module ainsi que Y, M' et C signés,

E) dans une troisième phase de calcul, réalisée par le microcalculateur de la carte, celui-ci vérifie à l'aide de la seconde clé publique que le certificat qu'il a reçu du microcalculateur du module de sécurité a bien été signé par celui-ci et, dans l'affirmative, il calcule l'exponentielle de l'exponentielle Y qu'il a reçue, ce qui lui donne la clé secrète commune fugitive qui lui permet d'extraire du cryptogramme le secret qu'il contient et qui lui est destiné.

Bien entendu, si la première et la seconde autorités ne font qu'une, celle-ci peut n'utiliser qu'une seule clé publique, la première et la seconde clés étant alors confondues.

De préférence, les exponentielles sur un ensemble fini utilisées par les deux microcalculateurs sont des exponentielles sur un corps fini ayant pour caractéristique un nombre entier p et une base a qui est un élément primitif du corps, le microcalculateur de la carte sélectionnant alors au hasard dans la première phase de calcul A, un exposant x positif inférieur à p et calculant l'exponentielle correspondante ($X = a^x \bmod p$), le microcalculateur du module de sécurité sélectionnant ensuite, dans la deuxième phase de calcul C, un entier y positif inférieur à p et calculant l'exponentielle correspondante ($Y = a^y \bmod p$) et élevant l'exponentielle X à la puissance y, soit $(a^x)^y \bmod p$, ce qui constitue la clé commune fugitive, le microcalculateur de la carte élevant ensuite, dans la troisième phase de calcul E, l'exponentielle Y à la puissance x, soit $(a^y)^x \bmod p$, ce qui lui donne la clé commune.

De préférence encore, le microcalculateur du module de sécurité calcule le cryptogramme à partir de la clé commune fugitive et du secret par une opération de OU-exclusif, et le microcalculateur de la carte extrait le secret du cryptogramme qu'il a reçu à partir de la clé commune fugitive par la même opération de OU-exclusif.

De toute façon, les caractéristiques de l'invention apparaîtront mieux à la lumière de la description qui va suivre, d'exemples de réalisation donnés à titre explicatif et nullement limitatif.

L'interface des cartes à puce est normalisé par la série de Normes internationales ISO/CEI 7816, "Cartes à circuit(s) intégré(s) à contacts", et en particulier par la Norme internationale ISO/CEI 7816-3, "Cartes à circuit(s) intégré(s) à contacts, Partie 3 : Signaux électroniques et protocoles de transmission" publiée en Septembre 1989.

Cette norme prescrit que les commandes sont engagées par le monde extérieur par un en-tête de cinq octets. La carte répond par un octet de procédure. Puis, un certain nombre d'octets de données sont échangés dans un seul sens. Enfin, la carte termine la commande par deux octets donnant son état à l'issue de la commande.

On distingue donc des commandes "entrantes" durant l'exécution desquelles les données entrent dans la carte et des commandes "sortantes" durant l'exécution desquelles des données quittent la carte.

Pour réaliser le procédé de l'invention dans le cadre de la norme, la carte émet donc d'abord, par une commande sortante, un certificat à destination du module de sécurité, puis reçoit, par une commande entrante, le certificat émis par le module de sécurité. Dans la pratique, le module de sécurité est également réalisé sous forme de carte à puce. Le module de sécurité reçoit donc, par une commande entrante, le certificat émis par la carte puis émet, par une commande sortante, le certificat à destination de la carte. Il n'y a pas lieu de faire d'hypothèses sur la sécurité des machines qui accueillent la carte et le module de sécurité, ni sur la sécurité des liaisons utilisées entre ces machines.

Les différentes phases du procédé de l'invention peuvent alors être les suivantes, dans les cas particuliers choisis à titre d'exemples :

## A) Première phase, réalisée par la carte à puce

La carte à puce sélectionne au hasard un exposant x positif inférieur à p (nombre premier de l'ensemble fini) et calcule l'exponentielle correspondante X :

$$X = a^x \bmod p.$$

Ensuite, la carte signe la valeur X et un éventuel message M à transmettre au module de sécurité. Pour ce faire, la carte sélectionne au hasard un élément r dans l'ensemble des entiers mod∗ n, et calcule, mod∗ n, la v-ième puissance de cet élément. Le résultat est le témoin initial Tb. Puis, la carte applique une fonction de compression "Hash" à un train de bits contenant l'exponentielle X, le message optionnel M et le témoin initial Tb. A partir du résultat, la carte élabore un pseudo-challenge initial db ayant une valeur de 0 à v-1, par exemple en sélectionnant les bits de poids faible. Enfin, la carte calcule mod∗ n le produit de l'élément r par la db-ième puissance de son accréditation secrète Bc. Le résultat est la réponse D.

On a donc les relations suivantes :

$Tb = r^v \bmod* n$ ;

$db = \text{sélect}(\text{Hash}(X, M, Tb))$ ;

$D = r\, Bc^{db} \bmod* n.$

## B) Premier mouvement de données

La carte à puce émet, vers le module de sécurité, un certificat qui est un train de bits contenant la créance Crc, la valeur X, le message optionnel M, le pseudo-challenge initial db et la réponse D. Les deux éléments de données db et D signent donc X et M.

## C) Deuxième phase de calcul, réalisée par le module de sécurité

Le module de sécurité calcule mod∗ n le produit de la v-ième puissance de la réponse D par la db-ième puissance du représentant Jc correspondant à la créance Crc. Le résultat est le témoin final Tf. Puis le module de sécurité applique la fonction de compression "Hash" à un train de bits contenant l'exponentielle X, le message optionnel M et le témoin final Tf. Le pseudo-challenge final df s'obtient en sélectionnant les bits de la même manière que la carte l'a fait.

On a donc les relations suivantes :

$Jc = \text{Red}(Crc)$ ;

$Tf = D^v\, Jc^{db} \bmod* n$ ;

$df = \text{sélect}(\text{Hash}(X, M, Tf)).$

Le module de sécurité accepte de continuer le traitement si et seulement si le pseudo-challenge final df est effectivement égal au pseudo-challenge initial db. Dans ce cas, la carte à puce a bien signé X et M et le certificat qu'elle a émis est correct.

Le module de sécurité sélectionne alors au hasard un exposant y positif inférieur à p, et calcule l'exponentielle correspondante Y. Puis il élève X à la puissance y dans le corps pour obtenir la clé commune fugitive K. La clé fugitive K peut être étendue par diversification grâce à la fonction de compression par Hash (K, 1), Hash (K, 2), Hash(K, 3), ... Puis il calcule le cryptogramme qui sera transmis à la carte. Par exemple, le cryptogramme C résultera du OU-exclusif de la clé commune fugitive K et du secret S.

On a donc les relations suivantes :

$Y = a^y \bmod p$ ;

$K = X^y \bmod p = a^{xy} \bmod p$ ;

$C = S \oplus K.$

Le module de sécurité signe alors les données utiles, à savoir l'exponentielle Y et un autre message optionnel M' à transmettre à la carte et le cryptogramme C. Pour ce faire, il sélectionne au hasard un élément r' dans l'ensemble des entiers mod∗ n' et calcule mod∗ n' la v'-ième puissance de cet élément. Le résultat est le témoin initial Tb'.

Le module de sécurité applique ensuite la fonction de compression "Hash" à un train de bits contenant l'exponentielle Y, le message optionnel M', le cryptogramme C et le témoin initial Tb'. A partir du résultat de cette compression, le module de sécurité élabore un pseudo-challenge initial db' ayant une valeur de U à v'-1, par exemple en sélectionnant les bits de poids faible. Enfin, il calcule mod∗ n' le produit de l'élément r' par la db'-ième puissance de son accréditation secrète Bm. Le résultat est la réponse D'.

On a donc les relations suivantes :

$Tb' = r'^{v'} \bmod* n'$ ;

$db' = \text{sélect}(\text{Hash}(Y, M', C, Tb'))$ ;

$D' = r'\, Bm^{db'} \bmod* n.$

## D) Deuxième mouvement de données

Le module de sécurité émet vers la carte un certificat qui est un train de bits contenant la créance Crm, l'exponentielle Y, le message optionnel M', le cryptogramme C, le pseudo-challenge initial db' et la réponse D'. Les deux éléments de données db' et D' signent donc les valeurs Y, M' et C. Et seule la carte saura reconstituer le secret S, car elle seule connaît l'exposant x.

## E) Troisième phase de calcul, réalisée par la carte

La carte calcule mod∗ n' le produit de la v'-ième puissance de la réponse D' par la db'-ième puissance du représentant Jm correspondant à la créance Crm. Le résultat est le témoin final Tf'.

Puis la carte applique la fonction de compression "Hash" à un train de bits contenant les valeurs Y, M', C et le témoin final Tf'. Le pseudo-challenge final df' s'obtient en sélectionnant les bits de la même manière que le module de sécurité l'a fait.

On a donc les relations suivantes :

Jm = Red(Crm) ;

Tf' = $D'^v$ $Jm^{db'}$ mod$*n'$ ;

df' = sélect(Hash(Y, M', C, Tf')).

La carte accepte de continuer le traitement si et seulement si le pseudo-challenge final df' est égal au pseudo-challenge initial db'. Dans l'affirmative le module de sécurité a effectivement signé Y, M' et C et le certificat qu'il a émis est correct.

La carte élève Y à la puissance x dans le corps choisi pour obtenir la clé secrète commune fugitive K. Eventuellement, la clé fugitive K est étendue de la même manière que dans le module de sécurité. Puis elle rétablit le secret S par OU-exclusif du cryptogramme C et de la clé commune fugitive K.

Enfin, la carte entreprend l'action commandée par le module, par exemple, l'écriture du secret S dans sa mémoire comme nouvelle clé en vue de calculs ultérieurs.

On a donc les relations suivantes :

$K = Y^x$ mod $p = a^{xy}$ mod $p$ ;

$S = C \oplus K$.

Le procédé qui vient d'être décrit peut être légèrement modifié pour permettre le transfert d'un secret depuis un module de sécurité vers une carte à puce, sans interaction, grâce à l'usage d'un annuaire. En effet, en radiodiffusion, les interactions entre des modules de sécurité et des cartes sont impossibles. De plus, l'organe de gestion des abonnés dispose d'un fichier d'informations, une sorte d'annuaire, pour agir sur les cartes des usagers. On peut donc avantageusement utiliser le procédé qui vient d'être décrit, à la condition que l'inscription à l'annuaire corresponde à la première phase (A) et au premier mouvement de données (B), l'utilisation de l'annuaire correspondant à la deuxième phase de calcul (C), au deuxième mouvement de données (D) et à la troisième phase de calcul (E).

Particulièrement souhaitables pour les applications relevant de la radiodiffusion, ces variantes s'avèrent également très utiles dans les systèmes de paiement et de courrier électroniques.

A propos des procédés de diffusion et de réception de messages de gestion de titres, on pourra se reporter au document FR-A-2 632 148.

Dans une première variante, chaque carte inscrit elle-même son certificat individuel à l'annuaire.

Dans une seconde variante, l'autorité gérant les modules de sécurité inscrit à l'annuaire un certificat collectif ; elle habilite les cartes du groupe une par une en attribuant à chacune un rang dans le groupe et en fixant un exposant commun x. En diffusion, il est en effet intéressant de disposer d'une clé commune partagée présente dans un groupe de cartes, avec une population de quelques centaines à quelques milliers de cartes par groupe. Dans ce cas, chaque carte du groupe porte donc l'adresse du groupe, l'exposant du groupe, et un rang dans le groupe. Le message M', figurant dans un certificat produit par un module de sécurité, précise :
- l'action commandée aux cartes du groupe (par exemple le renouvellement d'un abonnement) ;
- l'identification du groupe de cartes auquel le certificat est adressé (l'adresse du groupe) ;
- et un champ d'indexation ayant un nombre de bits égal ou supérieur au rang maximum attribué dans le groupe.

Revenant au procédé non-interactif de transfert, ces principales étapes sont alors les suivantes.

Pour constituer un certificat collectif, l'autorité utilise un autre module de sécurité, dans lequel l'exposant x est fixé à l'avance, comme exposant du groupe. Le message optionnel M comporte, dans ce cas, les informations décrivant les différentes cartes constituant le groupe. Quand une nouvelle carte est ajoutée à un groupe, il suffit de produire un nouveau certificat collectif pour mettre à jour le fichier du centre de gestion.

Une carte recevant un certificat collectif provenant d'un module de sécurité regarde si l'action envisagée n'a pas déjà été exécutée par elle, si ce certificat s'adresse bien au groupe auquel elle appartient et si le bit correspondant à son rang est bien à l'état actif dans le champ d'indexation. Alors seulement, elle exploite le certificat.

Le procédé non-interactif de transfert, comprend alors les principales étapes suivantes :

## A) Inscription à l'annuaire par une carte à puce ou par une autorité ayant créé un groupe

La production d'un certificat correspond à la première phase A) décrite plus haut. On rappelle brièvement ces calculs pour la constitution d'un certificat individuel par une carte :
- la carte à puce sélectionne au hasard un exposant x positif inférieur à p, et calcule l'exponentielle correspondante $X = a^x$ mod p,
- la carte à puce signe la valeur X et un éventuel message M à transmettre au module de sécurité ; pour ce faire, elle sélectionne au hasard un élément r dans l'ensemble des entiers mod$*$ n, et calcule mod$*$ n la v-ième puissance de cet élément ; le résultat est le témoin initial Tb,
- la carte applique une fonction de compression "Hash" à un train de bits contenant l'exponentielle X, le message optionnel M et le témoin initial Tb ;
- à partir du résultat, la carte élabore un pseudo-challenge initial db ayant une valeur de 0 à v-1, par exemple en sélectionnant les bits de poids faible ;
- la carte calcule mod$*$ n le produit de l'élément r par la db-ième puissance de son accréditation secrète Bc ; le résultat est la réponse D ;
- la carte à puce inscrit dans l'annuaire le certificat qui est un train de bits contenant la créance Crc, la valeur X, le message optionnel M, le pseudo-challenge initial db et la réponse D ; les deux éléments db et D signent donc X et M.

La carte à puce doit évidemment noter dans sa mémoire l'exposant secret x et diverses informations figurant dans le message optionnel M, telles que des dates limites de validité et des limitations d'usage.

L'annuaire est ainsi constitué d'une collection de certificats, individuels et collectifs, pouvant être vérifiés à tout moment.

**B) Utilisation de l'annuaire par un module de sécurité pour distribuer des secrets**

L'utilisation de l'annuaire se déroule en deux phases : d'abord vérification du certificat figurant à l'annuaire, puis élaboration du certificat qui va produire une action sur une carte ou sur un groupe de cartes. La première phase est conditionnelle : les certificats de l'annuaire sont vérifiés seulement si cela est nécessaire.

Les différentes opérations sont alors les suivantes :

a) Vérification d'un certificat de l'annuaire par le module de sécurité :

- le module de sécurité calcule mod∗ n le produit de la v-ième puissance de la réponse D par la db-ième puissance du représentant Jc correspondant à la créance Crc ; le résultat est le témoin final Tf ;
- le module de sécurité applique la fonction de compression "Hash" à un train de bits contenant l'exponentielle X, le message optionnel M et le témoin final Tf ; le pseudo-challenge final db s'obtient en sélectionnant les bits de la même manière que la carte ;
- le module de sécurité accepte de continuer si et seulement si le pseudo-challenge final df est effectivement égal au pseudo-challenge initial db ; la carte à puce a bien signé X et M ; le certificat de l'annuaire est correct.

b) Préparation d'un certificat pour action sur une carte à puce ou sur un groupe de cartes :

- le module de sécurité sélectionne au hasard un exposant y positif inférieur à p, et calcule l'exponentielle correspondante Y ; puis il élève X à la puissance y dans le corps pour obtenir la clé commune fugitive K ; la clé fugitive K peut être étendue par diversification grâce à la fonction de compression par Hash $(K, 1)$, Hash $(K, 2)$, Hash $(K,3)$, ...
- il calcule le cryptogramme qui sera transmis à la carte ; par exemple le cryptogramme C résulte du OU-exclusif de la clé commune fugitive K et du secret S ;

- enfin, le module de sécurité signe l'ensemble des données utiles, à savoir l'exponentielle Y, un autre message optionnel M' à transmettre à la carte et le cryptogramme C ; pour ce faire, il sélectionne au hasard un élément r' dans l'ensemble des entiers mod∗ n', et calcule mod∗ n' la v'-ième puissance de cet élément ; le résultat est le témoin initial Tb' ;
- il applique la fonction de compression "Hash" à un train de bits contenant l'exponentielle Y, le message optionnel M', le cryptogramme C et le témoin initial db' ayant une valeur de 0 à v'-1, par exemple en sélectionnant les bits de poids faible ;
- il calcule mod∗ n' le produit de l'élément r' par le db'-ième puissance de son accréditation secrète Bm ; le résultat est la réponse D'.

c) Transmission du certificat depuis le module de sécurité vers une carte à puce ou vers un groupe de cartes :

- Le module de sécurité émet un certificat qui est un train de bits contenant la créance Crm, l'exponentielle Y, le message optionnel M', le cryptogramme C, le pseudo-challenge initial db' et la réponse D'. Les deux éléments db' et D' signent donc les valeurs Y, M' et C. Il faut disposer de l'exposant x pour reconstituer le secret S.

d) Utilisation d'un certificat par une carte à puce :

- si le certificat est collectif, alors la carte regarde si l'action commandée n'a pas déjà été effectuée, si le certificat s'adresse à un groupe et si l'index correspondant à son rang dans le groupe est à l'état actif ;
- la carte calcule alors mod∗ n' le produit de la v' -ième puissance de la réponse D' par la db'-ième puissance du représentant Jm correspondant à la créance Crm ; le résultat est le témoin final Tf' ;
- la carte applique la fonction de compression "Hash" à un train de bits contenant les valeurs Y, M', C et le témoin final Tf'; le pseudo-challenge final df' s'obtient en sélectionnant les bits de la même manière que le module de sécurité l'a fait ;
- la carte accepte de continuer si et seulement si le pseudo-challenge final df' est égal au pseudo-challenge initial db' ; le module de sécurité a effectivement signé Y, M' et C et le certificat émis est correct ;
- la carte élève Y à la puissance x dans le corps pour obtenir la clé secrète commune fugitive K ; éventuellement, la clé fugitive K est étendue de la même manière que le module de sécurité l'a fait ;
- la carte rétablit le secret S par OU-exclusif du cryptogramme C et de la clé commune fugitive K, comme le module de sécurité l'a fait ;

- enfin, la carte entreprend l'action commandée par le module, par exemple l'écriture du secret S dans sa mémoire comme une nouvelle clé en vue de calculs ultérieurs.

On peut observer que l'annuaire qui vient d'être défini peut être utilisé par un module de sécurité pour gérer des droits. En effet, en radiodiffusion, le problème de gestion le plus fréquent consiste à gérer des droits dans des cartes. Or, pour gérer ces droits, il n'y a pas besoin de transmettre un secret. Aussi, ce dernier mécanisme peut être considéré comme une simplification du mécanisme précédent. Il est une application directe de la signature GQ et vient compléter les mécanismes précédents.

La carte accepte les certificats émis par un module de sécurité qui a été accrédité par l'autorité ayant publié la clé publique de vérification et qui présente les créances requises en termes d'objectif et de période de validité.

Les cartes sont organisées en groupes et chaque carte possède un rang dans le groupe. Le message M' figurant dans le certificat émis par le module de sécurité comporte l'adresse du groupe et un champ de bits au moins aussi nombreux que le rang maximum attribué dans le groupe. Ainsi, chaque carte peut reconnaître si le message s'adresse à son groupe et si le message s'adresse à elle dans le groupe, suivant l'état du bit correspondant à son rang.

Le message M' prescrit, en outre, l'action à entreprendre dans la carte, par exemple le renouvellement d'un abonnement, l'inscription d'une créance, une provision de tickets à consommer ultérieurement, ... Dans les créances du module de sécurité, l'autorité a précisé les actions que le module est habilité à entreprendre.

## Revendications

1. Procédé de transfert d'un secret (S) dans un premier microcalculateur appartenant à une carte à puce depuis un second microcalculateur appartenant à un module de sécurité, les premier et second microcalculateurs s'authentifiant réciproquement, ce procédé étant caractérisé par le fait que :

a) une première autorité habilitée à émettre des cartes s'étant préalablement dotée d'une première clé publique constituée d'un premier module arithmétique (n), d'un premier exposant de vérification (v) et d'un premier exposant de signature (s), et chaque carte ayant été définie par une accréditation (Bc) obtenue par signature d'une créance (Crc), cette signature étant vérifiable à l'aide de cette première clé publique,

b) une seconde autorité habilitée à émettre des modules de sécurité s'étant également préalablement dotée d'une seconde clé publique constituée d'un second module arithmétique (n'), d'un second exposant de vérification (v') et d'un second exposant de signature (s'), et un module de sécurité ayant été défini par une accréditation (Bm) obtenue par signature d'une créance (Crm), cette signature étant vérifiable à l'aide de la seconde clé publique,

c) enfin, le premier et le second microcalculateurs s'étant préalablement mis d'accord publiquement sur l'utilisation d'exponentielles sur un ensemble fini apte à établir une clé commune fugitive,

ce procédé comprend alors les cinq opérations suivantes :

A) dans une première phase de calcul, réalisée par le microcalculateur de la carte, ce microcalculateur calcule une exponentielle (X), un message optionnel (M) et signe (X) et (M), cette signature étant vérifiable à l'aide de la première clé publique,

B) dans un premier mouvement de données, le microcalculateur de la carte transmet au microcalculateur du module de sécurité un premier certificat, qui comprend la créance de la carte (Crc), ainsi que (X) et (M) signés,

C) dans une deuxième phase de calcul, réalisée par le microcalculateur du module de sécurité, ce microcalculateur vérifie, à l'aide de la première clé publique, que le certificat qu'il a reçu a bien été signé par la carte, et, dans l'affirmative, calcule l'exponentielle de l'exponentielle (X) qu'il a reçue, ce qui constitue une clé commune fugitive (K) et calcule encore un message optionnel (M'), sa propre exponentielle (Y), puis élabore un cryptogramme (C) à partir de la clé commune fugitive (K) et du secret (S) à transmettre, et signe (M'), (Y') et (C),

D) dans un deuxième mouvement de données, le microcalculateur du module de sécurité transmet au microcalculateur de la carte un second certificat, qui comprend la créance du module (Crm) ainsi que (Y), (M') et (C) signés,

E) dans une troisième phase de calcul, réalisée par le microcalculateur de la carte, celui-ci vérifie, à l'aide de la seconde clé publique, que le certificat qu,'il a reçu du microcalculateur du module de sécurité a bien été signé par celui-ci, et, dans l'affirmative, il calcule l'exponentielle de l'exponentielle (Y) qu'il a reçue, ce qui lui donne la clé secrète commune fugitive (K) qui lui permet d'extraire du cryptogramme (C) le secret (S) qu'il contient et qui lui est destiné.

2. Procédé selon la revendication 1, caractérisé par le fait que la première et la seconde autorités ne font qu'une.

3. Procédé selon la revendication 1, caractérisé par le fait que :
   - chaque carte est définie par un représentant (Jc) obtenu par redondance de la créance (J=Red(Crc)), l'autorité habilitée élevant la puissance -s mod∗ n le représentant (Jc), ce qui donne l'accréditation (Bc) (Jc Bc$^v$ mod∗ n=1),
   - un module de sécurité est défini par un représentant (Jm), obtenu par redondance de la créance (Jm=Red(Crm)), l'autorité habilitée élevant à la puissance -s' mod∗ n' le représentant (Jm), ce qui donne une accréditation (Bm) (Jm.Bm$^{v'}$ mod∗ n'=1).

4. Procédé selon la revendication 3 caractérisé par le fait que, dans la première phase de calcul, réalisée par le microcalculateur de la carte :
   a) le microcalculateur de la carte sélectionne et calcule sa propre exponentielle (X) sur l'ensemble fini choisi,
   b) le microcalculateur de la carte signe la valeur X et un éventuel message M à transmettre au microcalculateur du module de sécurité, et, pour ce faire, il sélectionne au hasard un élément r dans l'ensemble des entiers mod∗ n, et calcule mod∗n la v-ième puissance de cet élément, le résultat étant un témoin initial Tb, (Tb=r$^v$mod∗n),
   c) le microcalculateur de la carte applique une fonction de compression ("Hash") à un train de bits contenant l'exponentielle (X), le message optionnel (M) et le témoin initial (Tb),
   d) à partir du résultat, le microcalculateur de la carte élabore un pseudo-challenge initial db ayant une valeur de 0 à v-1, (Hash(X,M,Tb), (db=sélect(Hash(X,M,Tb)) en sélectionnant des bits du résultat de la compression,
   e) le microcalculateur de la carte calcule mod∗n le produit de l'élément r de la db-ième puissance de son accréditation (Bc), le résultat étant une réponse D, (D = r Bc$^{db}$ mod∗n),
   et par le fait que, dans le premier mouvement de données entre la carte et le module de sécurité, le premier certificat transmis est un train de bits contenant la créance de la carte (Crc), la valeur de l'exponentielle (X), le message optionnel (M), le pseudo-challenge initial (db) et la réponse (D), les deux éléments de données (db) et (D) signant (X) et (M).

5. Procédé selon la revendication 4, caractérisé par le fait que, dans la deuxième phase de calcul, réalisée par le microcalculateur du module de sécurité :
   a) le microcalculateur du module de sécurité calcule mod∗n le produit de la v-ième puissance de la réponse (D) par la db-ième puissance de son représentant (Jc), le résultat étant un témoin final Tf, (Tf=D$^v$ Jc$^{db}$ mod∗n),
   b) le microcalculateur du module de sécurité applique la fonction de compression ("Hash") à un train de bits contenant l'exponentielle (X), le message optionnel (M) et le témoin final (Tf), le microcalculateur sélectionne les bits de la même manière que la carte l'a fait pour obtenir un pseudo-challenge final (df), (df=sélect(Hash(X,M,Tf)),
   c) le microcalculateur du module de sécurité accepte de continuer le traitement si et seulement si le pseudo-challenge final (df) est égal au pseudo-challenge initial (db), ce qui indique que le microcalculateur de la carte a bien signé l'exponentielle (X) et le message (M) et que le premier certificat qu'elle a reçu est correct,
   d) le microcalculateur du module de sécurité calcule sa propre exponentielle (Y) dans l'ensemble fini choisi,
   e) le microcalculateur au module de sécurité calcule l'exponentielle de l'exponentielle (Y) pour obtenir une clé commune fugitive (K),
   f) le microcalculateur du module de sécurité calcule le cryptogramme (C) à l'aide de la clé commune fugitive (K) et d'un secret (S),
   g) le microcalculateur du module de sécurité signe l'exponentielle (Y), un autre message optionnel (M') à transmettre à la carte et le cryptogramme (C) et, pour ce faire, il sélectionne au hasard un élément (r') dans l'ensemble des entiers mod∗ n' et calcule mod∗n' la v'-ième puissance de cet élément, le résultat étant un témoin initial Tb', (Tb'=r'$^{v'}$ mod∗n'),
   h) le microcalculateur du module de sécurité applique la fonction de compression ("Hash") à un train de bits contenant l'exponentielle (Y), le message optionnel (M'), le cryptogramme (C) et le témoin initial (Tb'), (Hash(Y,M',C,Tb'),
   i) à partir du résultat de cette compression, le microcalculateur du module de sécurité élabore un pseudo-challenge initial (db') ayant une valeur de 0 à v'-1, (db'=sélect(Hash(Y,M',C,Tb')),
   j) le microcalculateur du module de sécurité calcule mod∗n' le produit de l'élément (r') par la db'-ième puissance de l'accréditation du module (Bm), le résultat étant une réponse (D'), (D'=r' Bm$^{db'}$mod∗n'),
   et par le fait que, dans le deuxième mouvement de données entre le module de sécurité et la carte, le microcalculateur du module de sécurité émet vers le microcalculateur de la carte le second certificat constitué par un train de bits contenant la créance du module (Crm), son exponentielle propre (Y), le message optionnel (M'), le cryptogramme (C), le pseudo-challenge initial (db') et la réponse (D'), les deux éléments de données (db') et (D') signant les valeurs (Y), (M') et (C).

6. Procédé selon la revendication 5, caractérisé par le fait que, dans la troisième phase de calcul, réalisée par le microcalculateur de la carte :

a) le microcalculateur de la carte calcule mod∗n' le produit de la v'-ième puissance de la réponse (D') par la db'-ième puissance du représentant du module (Jm) correspondant à la créance du module (Crm), le résultat étant un témoin final (Tf'), (Tf'=D'$^{v'}$ Jm$^{db'}$ mod∗n'),

b) le microcalculateur de la carte applique la fonction de compression "Hash" au train de bits contenant les valeurs (Y, M', C) constituant le second certificat et le témoin final (Tf'), elle sélectionne les bits de la même manière que le module de sécurité l'a fait et obtient ainsi un pseudo-challenge final (df'), (df'=Hash(Y,M',C,Tf')),

c) le microcalculateur de la carte accepte de continuer le traitement si et seulement si le pseudo-challenge final (df') est égal au pseudo-challenge initial (db'), ce qui indique que le microcalculateur du module de sécurité a effectivement signé (Y, M', C) et que le certificat qu'il a émis est correct,

d) le microcalculateur de la carte calcule l'exponentielle de l'exponentielle (Y) pour obtenir la clé secrète commune fugitive (K), et il extrait du cryptogramme (C) le secret (S) qu'il contient.

7. Procédé non interactif de transfert d'un secret dans des premiers microcalculateurs appartenant à autant de cartes depuis un second microcalculateur appartenant à un module de sécurité, caractérisé par le fait que, pour chaque carte, le premier certificat selon les revendications 1 à 6, est préalablement écrit dans un annuaire, lequel contient ainsi tous les certificats des différentes cartes, le microcalculateur du module de sécurité lisant ces certificats dans l'annuaire et éxécutant ensuite la phase C) de calcul selon les revendications 1 à 6 ainsi que la phase D) de mouvement de données vers la carte selon les revendications 1 à 6 dont il a lu le certificat dans l'annuaire, cette carte exécutant alors la phase E) de calcul selon les revendications 1 à 6 pour trouver le secret (S) qui lui est destiné.

8. Procédé selon la revendication 7, caractérisé par le fait que l'opération d'inscription à l'annuaire des cartes est effectuée par l'autorité gérant les modules de sécurité sous forme d'un certificat collectif valable pour un groupe de cartes, l'autorité :

- attribuant à chacune des cartes un rang dans le groupe,
- attribuant un exposant x commun,
- calculant le certificat collectif à l'aide d'un microcalculateur auxiliaire apte à établir un certificat dans lequel l'exposant x est fixé à l'avance comme exposant du groupe.

9. Procédé selon l'une quelconque des revendications 1 à 8, caractérisé par le fait que les exponentielles sur un ensemble fini utilisées par les deux microcalculateurs sont des exponentielles sur un corps fini ayant pour caractéristique un nombre premier (p) et pour base un élément primitif (a) du corps, le microcalculateur de la carte sélectionnant alors au hasard dans la première phase de calcul (A), un exposant x positif inférieur à p et calculant l'exponentielle correspondante (X=a$^x$ mod p), le microcalculateur du module de sécurité sélectionnant ensuite, dans la deuxième phase de calcul (C), un entier y positif inférieur à p et calculant l'exponentielle correspondante (Y=a$^y$ mod p) et élevant l'exponentielle (X) à la puissance y, soit (a$^x$)$^y$ mod p, ce qui constitue la clé commune fugitive (K), le microcalculateur de la carte élevant ensuite, dans la troisième phase de calcul (E), l'exponentielle correspondant à l'entier y (Y) à la puissance x, soit (a$^y$)$^x$ mod p, ce qui lui donne la clé commune (K).

10. Procédé selon l'une quelconque des revendications 1 à 9, caractérisé par le fait que :

- le microcalculateur du module de sécurité calcule le cryptogramme (C) à partir de la clé commune fugitive (K) et du secret (S) par une opération de OU-exclusif entre le secret (S) et la clé (K),
- le microcalculateur de la carte extrait le secret (S) du cryptogramme (C) qu'il a reçu à partir de la clé commune fugitive (K) par la même opération de OU-exclusif entre le cryptogramme (C) et la clé (K).

**Patentansprüche**

1. Übertragungsverfahren eines Geheimnisses (S) in einen ersten Mikrorechner, zu einer ersten Chipkarte gehörend, aus einem zweiten Mikrorechner, zu einem Sicherheitsmodul gehörend, wobei der erste und zweite Mikrorechner sich gegenseitig authentifizieren und dieses Verfahren **dadurch gekennzeichnet** ist:

a) daß eine erste zur Kartenausgabe ermächtigte Autorität sich vorhergehend versehen hat mit einem öffentlichen Schlüssel, gebildet durch einen ersten arithmetischen Modul (n), durch einen ersten Verifikationsexponenten (v) und durch einen ersten Signaturexponenten (s), und jede Karte definiert worden ist durch eine Akkreditierung (Bc), erhalten durch Signatur einer Beglaubigung (Crc), wobei diese Signatur überprüfbar ist mit Hilfe dieses ersten öffentlichen Schlüssels,

b) daß eine zweite zur Ausgabe der Sicherheitsmodule ermächtigte Autorität sich ebenfalls vorhergehend mit einem zweiten öffentlichen Schlüssel versehen hat, gebildet durch einen zweiten arthmetischen Modul (n'), einen zweiten Verifikationsexponenten (v') und einen zweiten Signaturexponenten (s'), und ein Sicherheitsmodul definiert worden ist durch eine Akkreditierung (Bm), erhalten durch Signatur einer Beglaubigung (Crm), wobei diese Signatur überprüfbar ist mit Hilfe des zweiten öffentlichen Schlüssels,

c) schließlich, daß der erste und der zweite Mikrorechner sich im voraus öffentlich geeinigt haben über die Anwendung von Exponentialfunktionen auf eine endliche Menge zum Erstellen eines flüchtigen, gemeinsamen Schlüssels,

wobei dieses Verfahren dann die fünf folgenden Operationen umfaßt:

A) in einer ersten Rechenphase, ausgeführt durch den Mikrorechner der Karte, berechnet dieser Mikrorechner eine Exponentialfunktion (X), eine optionelle Nachricht (M) und signiert (X) und (M), wobei diese Signatur überprüfbar ist mit Hilfe des ersten öffentlichen Schlüssels,

B) bei einer ersten Datenbewegung überträgt der Mikrorechner der Karte dem Mikrorechner des Sicherheitsmoduls ein erstes Zertifikat, das die Beglaubigung der Karte (Crc) umfaßt, sowie (X) und (M) signiert,

C) in einer zweiten Rechenphase, ausgeführt durch den Mikrorechner des Sicherheitsmoduls, überprüft dieser Mikrorechner mit Hilfe des ersten öffentlichen Schlüssels, ob das Zertifikat, das er erhalten hat, auch wirklich durch die Karte signiert wurde und berechnet, bei Bestätigung, die Exponentialfunktion der Exponentialfunktion (X), die er erhalten hat, was einen flüchtigen, gemeinsamen Schlüssel (K) bildet, und berechnet noch eine optionelle Nachricht (M'), seine eigene Exponentialfunktion (Y), erstellt dann ein Kryptogramm (C) aus dem flüchtigen, gemeinsamen Schlüssel (K) und dem zu übertragenden Geheimnis (S) und signiert (M'),(Y') und (C).

D) bei einer zweiten Datenbewegung überträgt der Mikrorechner des Sicherheitsmoduls dem Mikrorechner der Karte ein zweites Zertifikat, das die Beglaubigung des Moduls (Crm) umfaßt sowie (Y), (M') und (C) signiert.

E) in einer dritten Rechenphase, ausgeführt durch den Mikrorechner der Karte, überprüft dieser mit Hilfe des zweiten öffentlichen Schlüssels, ob das Zertifikat, das er vom Mikrorechner des Sicherheitsmoduls erhalten hat, auch wirklich durch diesen signiert wurde und er berechnet, bei Bestätigung, die Exponentialfunktion der Exponentialfunktion (Y), die er erhalten hat, was ihm den flüchtigen, gemeinsamen Geheimschlüssel (K) gibt, der ihm ermöglicht, aus dem Kryptogramm (C) das Geheimnis (S), das es enthält und das für ihn bestimmt ist, zu extrahieren.

2. Verfahren nach Anspruch 1, dadurch gekennzeichnet, daß die erste und die zweite Autorität nur eine bilden.

3. Verfahren nach Anspruch 1, dadurch gekennzeichnet:
   - daß jede Karte definiert wird durch einen Repräsentanten (Jc), erhalten durch Redundanz der Beglaubigung (J=Red(Crc)), wobei die ermächtigte Autorität den Repräsentanten (Jc) in die Potenz -s mod* n erhebt, was die Akkreditierung (Bc) (Jc Bc$^v$ mod* n=1) gibt,
   - daß ein Sicherheitsmodul definiert wird durch einen Repräsentanten (Jm), erhalten durch Redundanz der Beglaubigung (Jm=Red(Crm)), wobei die ermächtigte Autorität den Repräsentanten (Jm) in die Potenz -s' mod* n' erhebt, was eine Akkreditierung (Bm) (Jm.Bm$^{v'}$ mod* n'=1) gibt.

4. Verfahren nach Anspruch 3, dadurch gekennzeichnet, daß eine erste Rechenphase, ausgeführt durch den Karten-Mikrorechner, folgende Schritte umfaßt:
   a) der Karten-Mikrorechner wählt und berechnet seine eigene Exponentialfunktion (X) aus der gewählten endlichen Menge,
   b) der Karten-Mikrorechner signiert den Wert X und eine eventuell an den Sicherheitsmodul-Mikrorechner zu übertragende Nachricht M und er wählt, um dies auszuführen, aufs Geratewohl ein Element r aus der Gesamtheit der Ganzzahlen mod*n und rechnet mod*n die v-te Potenz dieses Elements, wobei das Resultat ein Anfangszeuge Tb ist, (Tb=r$^v$mod*n),
   c) der Karten-Mikrorechner wendet eine Kompressionsfunktion ("Hash") auf eine Bitkette an, die die Exponentialfunktion (X), die optionelle Nachricht (M) und den Anfangszeugen (Tb) umfaßt,

d) der Karten-Mikrorechner entwickelt aus dem Resultat eine Pseudo-Anfangsabfrage (db) mit einem Wert von 0 bis v-1, (Hash(X,M,Tb), (db=Auswahl(Hash(X,M,Tb)), wobei Bits des Resultats der Kompression ausgewählt werden,

e) der Karten-Mikrorechner rechnet mod*n das Produkt des Elements r der db-ten Potenz seiner Akkreditierung (Bc), wobei das Resultat eine Antwort D ist, $(D = r \, Bc^{db} \bmod * n)$, und dadurch, daß bei der ersten Datenbewegung zwischen der Karte und dem Sicherheitsmodul das erste übertragene Zertifikat eine Bitkette ist, umfassend die Beglaubigung der Karte (Crc), den Wert der Exponentialfunktion (X), die optionelle Nachricht (M), die Pseudo-Anfangsabfrage (db) und die Antwort (D), die zwei Datenelemente (db) und (D), (X) und (M) signierend.

5. Verfahren nach Anspruch 4, dadurch gekennzeichnet, daß die zweite Rechenphase, ausgeführt durch den Sicherheitsmodul-Mikrorechner, folgende Schritte umfaßt:

a) der Sicherheitsmodul-Mikrorechner rechnet mod*n das Produkt der v-ten Potenz der Antwort (D) mal der db-ten Potenz seines Repräsentanten (Jc), wobei das Resultat ein Endzeuge Tf ist, $(Tf=D^v Jc^{db} \bmod * n)$,

b) der Sicherheitsmodul-Mikrorechner wendet die Kompressionsfunktion ("Hash") auf eine Bitkette an, die die Exponentialfunktion (X), die optionelle Nachricht (M) und den Endzeugen (Tf) umfaßt, der Mikrorechner wählt die Bits auf dieselbe Weise aus, wie die Karte es gemacht hat, um eine Pseudo-Endabfrage (df), (df=Auswahl(Hash(X,M,Tf)) zu erhalten,

c) der Sicherheitmodul-Mikrorechner akzeptiert, die Verarbeitung fortzusetzen, wenn und nur wenn die PseudoEndabfrage (df) gleich der Pseudo-Anfangsabfrage (db) ist, was anzeigt, daß der Mikrorechner der Karte die Exponentialfunktion (X) und die Nachricht (M) tatsächlich signiert hat, und daß das erste Zertifikat, das sie erhalten hat, korrekt ist,

d) der Sicherheitsmodul-Mikrorechner berechnet seine eigene Exponentialfunktion (Y) aus der gewählten endlichen Menge,

e) der Sicherheitsmodul-Mikrorechner berechnet die Exponentialfunktion der Exponentialfunktion (Y), um einen flüchtigen, gemeinsamen Schlüssel (K) zu erhalten,

f) der Sicherheitmodul-Mikrorechner berechnet das Kryptogramm (C) mit Hilfe des flüchtigen, gemeinsamen Schlüssels (K) und eines Geheimnisses (S),

g) der Sicherheitsmodul-Mikrorechner signiert die Exponentialfunktion (Y), eine weitere optionelle, an die Karte zu übertragende Nachricht (M') und das Kryptogramm (C), und er wählt, um dies auszuführen, aufs Geratewohl ein Element (r') aus der Gesamtheit der Ganzzahlen mod* n' und rechnet mod*n' die v'-te Potenz dieses Elements, wobei das Resultat ein Anfangszeuge Tb' ist, $(Tb'=r'^{v'-} \bmod * n')$,

h) der Sicherheitsmodul-Mikrorechner wendet die Kompressionsfunktion ("Hash") auf eine Bitkette an, umfassend die Exponentialfunktion (Y), die optionelle Nachricht (M'), das Kryptogramm (C) und den Anfangszeugen (Tb'), (Hash(y,M',C,Tb'),

i) der Sicherheitsmodul-Mikrorechner entwickelt aus den Resultaten dieser Kompression eine Pseudo-Anfangsabfrage (db') mit einem Wert von 0 bis v'-1, (db'=Auswahl(Hash(Y,M',C,Tb')),

j) der Sicherheitsmodul-Mikrorechner rechnet mod*n' das Produkt (r') mal der db-ten Potenz der Akkreditierung des Moduls (Bm), wobei das Resultat eine Antwort (D') ist, $(D'=r' \, Bm^{db'} \bmod * n')$,

und dadurch, daß bei der zweiten Datenbewegung zwischen dem Sicherheitsmodul und der Karte der Sicherheitsmodul-Mikrorechner an den Karten-Mikrorechner das zweite Zertifikat sendet, gebildet durch eine Bitkette, umfassend die Beglaubigung des Moduls (Crm), seine eigene Exponentialfunktion (Y), die optionelle Nachricht (M'), das Kryptogramm (C), die Pseudo-Anfangsabfrage (db') und die Antwort (D'), wobei die beiden Datenelemente (db') und (D') die Werte (Y), (M') und (C) signieren.

6. Verfahren nach Anspruch 5, dadurch gekennzeichnet, daß die dritte Rechenphase, ausgeführt durch den Karten-Mikrorechner, folgende Schritte umfaßt:

a) der Karten-Mikrorechner rechnet mod*n' das Produkt der v'-ten Potenz der Antwort (D') mal der db'-ten Potenz des Repräsentanten des Moduls (Jm), entsprechend der Beglaubigung des Moduls (Crm), wobei das Resultat ein Endzeuge (Tf') ist, $(Tf'=D'^{v'} Jm^{db'} \bmod * n')$,

b) der Mikrorechner der Karte wendet die Kompressionsfunktion "Hash" an auf die Bitkette mit den Werten (Y,M',C), das zweite Zertifikat bildend, und den Endzeugen (Tf'), sie wählt die Bits auf dieselbe Weise aus, wie der Sicherheitsmodul es getan hat, und erhält so eine PseudoEndabfrage (df'), (df'=Hash(Y,M',C,Tf')),

c) der Karten-Mikrorechner akzeptiert die Fortsetzung der Verarbeitung, wenn und nur wenn die Pseudo-Endabfrage (df') gleich der Pseudo-Anfangsabfrage (ab') ist, was anzeigt, daß der Sicherheitsmodul-Mikrorechner effektiv signiert hat (Y, M',C) und daß das Zertifikat, das er gesendet hat, korrekt ist,

d) der Karten-Mikrorechner berechnet die Exponentialfunktion der Exponentialfunktion (Y), um den flüchtigen, gemeinsamen Schlüssel (K) zu erhalten, und er extrahiert aus dem Kryptogramm (C) das Geheimnis (S), das es enthält.

7. Nichtinteraktives Übertragungsverfahren eines Geheimnisses in erste Mikrorechner, zu ebensovielen Karten gehörend, aus einem zweiten, zu einem Sicherheitsmodul gehörenden zweiten Mikrorechner, **dadurch gekennzeichnet**, daß für jede Karte das erste Zertifikat nach den Ansprüchen 1 bis 6 in ein Verzeichnis geschrieben wird, das somit alle Zertifikate der verschiedenen Karten enthält, wobei der Sicherheitsmodul-Mikrorechner diese Zertifikate in dem Verzeichnis liest und anschließend die Rechenphase C) nach den Ansprüchen 1 bis 6 durchführt, sowie die Phase D) der Datenbewegung in Richtung der Karte, nach den Ansprüchen 1 bis 6, deren Zertifikat er in dem Verzeichnis gelesen hat, wobei diese Karte dann die Rechenphase E) durchführt, nach den Ansprüchen 1 bis 6, um das Geheimnis (S) zu finden, das für sie bestimmt ist.

8. Verfahren nach Anspruch 7, dadurch gekennzeichnet, daß die Einschreiboperation in das Kartenverzeichnis ausgeführt wird durch die Autorität, die die Sicherheitmodule verwaltet in Form eines Kollektivzertifikats, gültig für eine Kartengruppe, wobei die Autorität:
   - jeder Karte einen Rang in der Gruppe zuteilt,
   - einen gemeinsamen Exponenten x zuteilt,
   - das Kollektivzertifikat berechnet mit Hilfe eines zusätzlichen Mikrorechners, der ein Zertifikat erstellen kann, in dem der Exponent x im voraus als Gruppenexponent festgelegt wird.

9. Verfahren nach einem der Ansprüche 1 bis 8, dadurch gekennzeichnet, daß die Exponentialfunktionen aus einer endlichen Menge, verwendet durch die beiden Mikrorechner, Exponentialfunktionen auf einem endlichen Körper sind, mit, als Charakteristik, einer Primzahl (p) und, als Basis, ein Grundelement (a) des Körpers, wobei der Karten-Mikrorechner dann aufs Geratewohl in der ersten Rechenphase (A) einen positiven Exponenten x kleiner als p auswählt und die entsprechende Exponentialfunktion ($X = a^x$ mod p) berechnet, der Sicherheitmodul-Mikrorechner anschließend in der zweiten Rechenphase (C) eine positive Ganzzahl y kleiner als p wählt und die entsprechende Exponentialfunktion ($Y = a^y$ mod p) berechnet und die Exponentialfunktion (X) in die Potenz y erhebt, also $(a^x)^y$ mod p, was den flüchtigen, gemeinsamen Schlüssel (K) bildet, der Karten-Mikrorechner anschließend in der dritten Rechenphase (E) die der Ganzzahl y entsprechende Exponentialfunktion (Y) in die Potenz x erhebt, also $(a^y)^x$ mod p, was ihm den gemeinsamen Schlüssel (K) gibt.

10. Verfahren nach einem der Ansprüche 1 bis 9, dadurch gekennzeichnet:
   - daß der Sicherheitsmodul-Mikrorechner das Kryptogramm (C) aus dem flüchtigen, gemeinsamen Schlüssel (K) und dem Geheimnis (S) durch eine Antivalenz-Operation zwischen dem Geheimnis (S) und dem Schlüssel (K) berechnet,
   - daß der Karten-Mikrorechner das Geheimnis (S) extrahiert aus dem Kryptogramm (C), das er aus dem flüchtigen, gemeinsamen Schlüssel (K) durch dieselbe Antivalenz-Operation zwischen dem Kryptogramm (C) und dem Schlüssel (K) erhalten hat.

## Claims

1. A method of transferring a secret (S) in a first microcomputer belonging to a chip card to a second microcomputer belonging to a security module, the first and second microcomputers establishing reciprocal authentification, this method being characterized in that:

   a) a first authority entitled to issue cards which have previously been provided with a first public key constituted by a first arithmetical modulo (n), a first verification exponent (v) and a first signature exponent (s), and each card having been defined by an accredition (Bc) obtained by signature of a credential (Crc), which signature can be verified with the aid of this first public key,

   b) a second authority entitled to issue security modules which have also previously been provided with a second public key constituted by a second arithmetical modulo (n'), a second verification authority (v') and a second signature exponent(s') and a security module having been defined by an accredition (Bm) obtained by signature of a credential (Crm) which signatures can be verified with the aid of the second public key,

c) finally, the first and second microcomputers having previously publically agreed to the use of exponentials in a finite set suitable to establish a common transitory key,

this method then comprises the following five operations:

A) in a first computational stage, realised by the microcomputer of the card, this microcomputer calculates an exponential (X), an optional message (M) and a signature of (X) and (M), this signature being verifiable with the aid of the first public key,

B) in a first data transfer, the microcomputer of the card transmits towards the microcomputer of the security module a first certificate which comprises the credentials of the card (Crc), as well as the signature of (X) and (M),

C) in a second computational stage, realised by the microcomputer of the security module, this microcomputer verifies, with the aid of the first public key, whether the certificate it has received, has been properly signed by the card, and, if so, calculates the exponential of the exponential (X) it has received, which constitutes a common transitory key (K) and then calculates an optional message (M′), its own exponential (Y) and thereafter works out a cryptogram (C) from the common transistory key (K) and from the secret (S) to be transmitted, and signs (M′), (Y′) and (C),

D) in a second data transfer, the microcomputer of the security module transmits to the microcomputer of the card a second certificate which comprises the credential of the module (Crm) as well as the signed (Y), (M′) and (C),

E) in a third computational stage, realised by the microcomputer of the card, this microcomputer verifies with the aid of the second public key, whether the certificate it has received from the microcomputer of the security module has indeed been signed by the microcomputer, and if so, it calculates the exponential of the exponential (Y) it has received, which gives it the common transitory secret key (K) by means of which it can extract from the cryptogram (C) the secret (S) it contains and which is intended for it.

2. A method as claimed in Claim 1, characterized by the fact that the first and second authorities are one and the same.

3. A method as claimed in Claim 1, characterized in that:
   - each card is defined by a representative (Jc) obtained by redundancy of the credential (J=Red(Crc)), the entitled authority raising the representative (Jc) to the power -s mod∗n, which results in the accreditation (BC) (Jc Bc$^v$ mod∗n=1),
   - a security module is defined by a representative (Jm) obtained by redundancy of the letter of credentials (Jm = Red(Crm)), the entitled authority raising the representative (Jm) to the power -s′ mod∗ n′, which results in an accreditation (Bm) (Jm.Bm$^v$ mod∗ n′=1).

4. A method as claimed in Claim 23, characterized in that, in the first calculation stage, effected by the microcomputer of the card:
   a) the microcomputer of the card selects and calculates its own exponential (X) on the chosen finite set,
   b) the microcomputer of the card signs the value X and any message M to be transmitted to the microcomputer of the security module, and, to effect this, it randomly selects an element r from the set of integers mod∗n, and calculates mod∗n the v$^{th}$ power of this element, the result being an initial evidence Tb (Tb = r$^v$ mod∗n),
   c) the microcomputer of the card applies a compression function ("Hash") to a bit train containing the exponential (X), the optional message (M) and the initial evidence (Tb),
   d) from the result, the microcomputer of the card develops an initial pseudo-challenge db having a value from 0 to v-1, (Hash(X, M, Tb), (db = select (Hash (X, M, Tb)) by selecting bits of the result of the compression,
   e) the microcomputer of the card calculates mod∗n the product of the element r by the db$^{th}$ power of its accreditation (Bc), the result being an answer D, (D = r Bc$^{db}$ mod∗n),

and by the fact that, in the first data transfer between the card and the security module, the first certificate transmitted is a bit train containing the credential of the card (Crc), the value of the exponential (X), the optional message (M), the initial pseudo-challenge (db) and the answer (D), the two elements of the data (db) and (D) signing (X) and (M).

5. A method as claimed in Claim 4, characterized in that, in the second calculating stage, performed by the microcomputer of the security module:
   a) the microcomputer of the security module calculates mod∗n the product of the v$^{th}$ power of the answer (D) by the db$^{th}$ power of its representative (Jc), the result being a final evidence Tf (Tf=D$^v$ Jc$^{db}$ mod∗n),
   b) the microcomputer of the security module applies the compression function ("Hash") to a bit train containing the exponential (X), the optional message (M) and the final evidence (Tf), the microcomputer selects the bits in the same manner as the card has done to obtain a final pseudo-challenge (df), (df=select (Hash(X,M,Tf)),

c) the microcomputer of the security module accepts the continuation of the processing operation if, and only if the final pseudo-challenge (df) is equal to the initial pseudo-challenge (db), which indicates that the microcomputer of the card has properly signed the exponential (X) and the message (M) and in that the first certificate it has received is correct,

d) the microcomputer of the security module calculates its own exponential (Y) in the chosen finite set,

e) the microcomputer of the security module calculates the exponential of the exponential (Y) to obtain a common transitory key (K),

f) the microcomputer of the security module calculates the cryptogram (C) with the aid of the common transitory key (K) and a secret (S),

g) the microcomputer of the security module signs the exponential (Y), a further optional message (M') to be transferred to the card and the cryptogram (C) and, to effect this it randomly selects an element (r') from the set of integers mod∗n' and calculates mod∗n' the v'th power of this element, the result being an initial evidence Tb', $(Tb'=r'^{v'} \bmod{*}n')$,

h) the microcomputer of the security module applies the compression function ("Hash") to a bit train containing the exponential (Y), the optional message (M'), the cryptogram (C) and the initial evidence (Tb'), (Hash(Y,M',C,Tb),

i) from the result of this compression, the microcomputer of the security module develops an initial pseudo-challenge (db') having a value from 0 to v'-1, (db'= select(Hash(Y,M',C,Tb')),

j) the microcomputer of the security module calculates mod∗n' the product of the element (r') by the db'th power of the accredition of the module (Bm), the result being an answer (D'), $(D'=r' \; Bm^{db'} \bmod{*}n')$,

and in that, in the second data flow between the security module and the card, the microcomputer of the security module transmits towards the microcomputer of the card the second certificate constituted by a bit train containing the credential of the module (Crm), its own exponential (Y), the optional message (M'), the cryptogram (C), the initial pseudo-challenge (db') and the answer (D'), the two data elements (db') and (D') signing the values (Y), (M') and (C).

6. A method as claimed in Claim 5, characterized in that, in the third calculation stage, effected by the microcomputer of the card:

a) the microcomputer of the card calculates mod∗n' the product of the v'th power of the answer (D') by the db'th power of the representative of the module (Jm) corresponding to the credential of the module (Crm), the result being a final evidence (Tf'), $(Tf' = D'^{v'} \; Jm^{db'} \bmod{*}n')$,

b) the microcomputer of the card applies the compression function "Hash" to the bit train containing the values (Y,M',C) constituting the second certificate and the final evidence (Tf'), it selects the bits in the same manner as the security module has done and thus obtains a final pseudo-challenge (df'), (df'=Hash(Y,M',C,Tf')),

c) the microcomputer of the card agrees to continue the processing operation if and only if the final pseudo-challenge (df') is equal to the initial pseudo-challenge (db'), which indicates that the microcomputer of the security module has effectively signed (Y, M', C) and that the certificate it has transmitted is correct,

d) the microcomputer of the card calculates the exponential of the exponential (Y) to obtain the common transitory secret key (K), and it extracts from the cryptogram (C) the secret (S) it contains.

7. A non-interactive transfer method of a secret in first microcomputers belonging to as many cards from a second microcomputer belonging to a security module, characterized in that, for each card, the first certificate claimed in the Claims 1 to 6, has previously been written into a directory, which directory thus contains all the certificates of the different cards, the microcomputer of the security module reading the certificates in the directory and thereafter performing the computational stage C) which is the object of the claims 1 to 6 as well as the stage D) of the data flow towards the card according to claims 1 to 6 from which it has entered the certificate into the directory, this card then performing the computational stage E) according to claims 1 to 6 to find the secret (S) intended for it.

8. A method as claimed in Claim 7, characterized in that the operation of writing the cards into the directory is effected by the authority managing the security modules in the form of a collective certificate valid for a group of cards, the authority:

- assigning to each card a rank in the group,
- assigning a common exponent x,
- calculating the collective certificate with the aid of an auxiliary microcomputer suitable for establishing a certificate in which the exponent x is previously fixed as the exponent of the group.

9. A method as claimed in any one of the Claims 1 to 8, characterized in that the exponentials of a finite set utilised by the two microcomputers are exponentials of a finite field having for its characteristics a first number (p) and for its base a primitive element (a) of the field, the microcomputer of the card then randomly selecting in the first computational stage (A), a positive exponent x less than p and calculating the corresponding exponential ($X = a^x \bmod p$), the microcomputer of the security module then selecting, in the second computational stage (C), a positive integer y less than p and calculating the corresponding exponential ($y = a^y \bmod p$) and raising the exponential (X) to the power y , i.e. $(a^x)^y \bmod p$, which constitutes the common transitory key (K), the microcomputer of the card thereafter raising, in the third calculating stage (E), the exponential (Y) corresponding to the integer y to the power x, i.e. $(a^y)^x \bmod p$, which gives it the common key (K).

10. A method as claimed in any one of the Claims 1 to 9, characterized in that:
    - the microcomputer of the security module calculates the cryptogram (C) from the common transitory key (K) and of the secret (S) by an exclusive-OR operation between the secret (S) and the key (K),
    - the microcomputer of the card extracts the secret (S) from the cryptogram (C) it has received from the common transitory key (K) by the same exclusive-OR operation between the cryptogram (C) and the key (K).